# EUROPÄISCHE PATENTANMELDUNG

(11) **EP 1 808 344 A1**
(43) Veröffentlichungstag der Anmeldung: **18.07.2007**
(21) Anmeldenummer: 07100317.2
(22) Anmeldetag: 10.01.2007
(51) Int. Cl.: B60R 25/00, G07C 9/00

(54) **Vorrichtung zur Ansteuerung einer Fahrzeugtürverriegelung**

(30) Priorität: 13.01.2006 DE 102006001719
(71) Anmelder: Ford Global Technologies, LLC, Dearborn, MI 48126 (US)
(72) Erfinder: Friese, Marco, 40233, Düsseldorf (DE)
(74) Vertreter: Dörfler, Thomas

(57) **Zusammenfassung**

Die Erfindung betrifft eine Vorrichtung zur Ansteuerung einer Fahrzeugtürverriegelung mit einer tragbaren Identifikationseinheit (10) und einer fahrzeugseitigen Steuerungseinrichtung (20), welche bei Annäherung der Identifikationseinheit auf Basis des Resultats einer berührungslosen Datenkommunikation zwischen der Steuerungseinrichtung und der Identifikationseinheit zur Überprüfung der Zugangsberechtigung für die Identifikationseinheit ein Steuersignal zum Entriegeln der Fahrzeugtürverriegelung erzeugt, wenn ein Vorliegen der Zugangsberechtigung für die Identifikationseinheit festgestellt wurde. Die fahrzeugseitige Steuerungseinrichtung ist so ausgelegt, dass bei Annäherung einer Person die berührungslose Datenkommunikation bei Unterschreiten eines ersten endlichen Abstandes (d₁) zwischen der Person und einem Personensensor (23) ausgelöst wird, und nach erfolgreicher Identifikation der Identifikationseinheit das Steuersignal zum Entriegeln der Verriegelungseinrichtung erzeugt wird, wenn die Person einen zweiten endlichen Abstand (d₂) zu einem vorgegebenen Ort am Fahrzeug erreicht hat, welcher kleiner als der erste Abstand ist.

## Beschreibung

Die Erfindung betrifft eine Vorrichtung zur Ansteuerung der Verriegelung einer Fahrzeugtüreinrichtung gemäß dem Oberbegriff des Patentanspruches 1.

Vorrichtungen zur Ansteuerung einer Fahrzeugtürverriegelung, bei denen eine Entriegelung nach vorheriger elektronischer Überprüfung der Zugangsberechtigung und in Abhängigkeit von einer ordnungsgemäßen Datenkommunikation zwischen einer fahrzeugseitig vorgesehenen Signalverarbeitungseinrichtung und einer mobilen, benutzerseitigen Schlüsseleinrichtung erfolgt, sind z.B. aus DE 103 30 807 A1, DE 1002 38 134 A1 und EP 1 023 511 B1 bekannt.

Aus EP 0 952 052 B1 ist eine Vorrichtung für eine fernsteuerbare Zugangskontrolleinrichtung bekannt, welche einen transportablen Identifikationsgeber und eine im oder am Fahrzeug angeordnete Sende- und Empfangseinheit umfasst. Diese Sende- und Empfangseinheit übermittelt bei positiver Identifikation des Identifikationsgebers auf Basis einer hierzu durchgeführten Hochfrequenzkommunikation ein Steuersignal an eine Verriegelungseinheit. Die Verriegelungseinheit wird erst dann zum Verriegeln oder Entriegeln des Fahrzeuges angesteuert, wenn sie durch eine weitere Sensorik z.B. in Form eines Berührungssensors angesteuert wird. Hierdurch soll erreicht werden, dass zusätzlich zu der Annäherung des Kraftfahrzeugführers an das Fahrzeug eine weitere bewusste Handlung notwendig ist, wobei zum einen ein versehentliches Entriegeln des Fahrzeuges vermieden werden soll (beispielsweise wenn der Kraftfahrzeugführer an dem Fahrzeug vorbeigeht), und wobei zum anderen insbesondere auch für einen Dritten ohne die Kenntnis, welche bewusste Handlung vorzunehmen ist, der Zugang allein infolge Besitzes des Identifikationsgebers nicht möglich sein soll.

Allerdings wird bei dieser bekannten Vorrichtung das Entriegeln des Fahrzeuges erst nach Vornahme der jeweiligen bewussten Handlung eingeleitet, so dass die hiermit einhergehende, für den Einriegelungsvorgang benötigte Zeitspanne entweder als Zeitverlust in Kauf genommen werden muss oder zur Minimierung dieser Zeitspanne komplexe und aufwendige Verriegelungseinrichtungen verwendet werden müssen.

Aufgabe der vorliegenden Erfindung ist es, eine Vorrichtung zur Ansteuerung einer Fahrzeugtürverriegelung bereitzustellen, welche auch bei Verwendung relativ einfacher Verriegelungseinrichtungen eine rasche Entriegelung der Fahrzeugtür ermöglicht.

Die Lösung der vorgenannten Aufgabe erfolgt mittels einer Vorrichtung mit den Merkmalen des Patentanspruches 1.

Eine erfindungsgemäße Vorrichtung zur Ansteuerung einer Fahrzeugtürverriegelung umfasst gattungsgemäß eine tragbare Identifikationseinheit und eine fahrzeugseitige Steuerungseinrichtung, welche bei Annäherung der Identifikationseinheit auf Basis des Resultats einer berührungslosen Datenkommunikation zwischen der Steuerungseinrichtung und der Identifikationseinheit zur Überprüfung der Zugangsberechtigung für die Identifikationseinheit ein Steuersignal zum Entriegeln der Fahrzeugtürverriegelung erzeugt, wenn ein Vorliegen der Zugangsberechtigung für die Identifikationseinheit festgestellt wurde.

Die fahrzeugseitige Steuerungseinrichtung ist so ausgelegt, dass
- bei Annäherung einer Person die berührungslose Datenkommunikation bei Unterschreiten eines ersten endlichen Abstandes zwischen der Person und einem Personensensor ausgelöst wird, und
- nach erfolgreicher Identifikation der Identifikationseinheit das Steuersignal zum Entriegeln der Fahrzeugtürverriegelung erzeugt wird, wenn die Person einen zweiten endlichen Abstand zu einem vorgegebenen Ort am Fahrzeug erreicht hat, welcher kleiner als der erste Abstand ist.

Der Begriff "Fahrzeugtür" im Sinne der vorliegenden Anmeldung umfasst jegliche zur Ermöglichung oder Blockierung des Zuganges zum Fahrzeug dienende Einrichtung, also beispielsweise auch eine Heckklappe oder einen Kofferraumdeckel.

Unter "Abstand einer Person" im Sinne der vorliegenden Erfindung soll insbesondere der Abstand verstanden werden, der zwischen einem entsprechenden Abstandssensor und einem dem Sensor am nächsten kommenden Körperteil der Person vorliegt. In der Regel handelt es sich um den Abstand zwischen dem Sensor und der Hand oder dem Arm der Person, die den Tür- oder Kofferraumgriff greift.

Das Erzeugen des Steuersignals zum Entriegeln der Fahrzeugtürverriegelung bei Erreichen des zweiten endlichen Abstandes der Person erfolgt automatisch ohne das Erfordernis einer weiteren Handlung seitens dieser Person. Auf diese Weise wird der Entriegelungsvorgang noch während der Annäherung der Person eingeleitet und kann auch bei Verwendung einer vergleichsweise einfachen Verriegelungseinrichtung (ohne besonders kurze Schließdauer) bereits abgeschlossen sein, wenn die Hand der Person den dann bereits entriegelten Türgriff berührt. Dabei kann der natürliche, dem Öffnen einer Fahrzeugtür vorhergehende Bewegungsvorgang, d.h. die Annäherung einer Hand des Fahrers an die Fahrzeugtür einschließlich der nachfolgenden Handbewegung bis zur Betätigung des Türgriffes, sowohl für eine Überprüfung der Zugangsberechtigung als auch für den eigentlichen mechanischen Entriegelungsvorgang genutzt werden, so dass die berechtigte Person auch bei Verwendung vergleichsweise einfacher Verriegelungseinrichtungen ohne jegliche entriegelungsbedingte Verzögerung Zutritt zum Fahrzeug erhält.

Das Unterschreiten des zweiten endlichen Abstandes wird erfindungsgemäß mittels eines Näherungssensors festgestellt, der sich an dem vorgegebenen Ort am Fahrzeug befindet und der bei Unterschreiten des zweiten endlichen Abstandes automatisch auslöst, ohne dass eine weitere Handlung (etwa wie bei einem Berührungssensor) notwendig ist oder ein weiterer Identifikationsvorgang (wie etwa bei einer gemäß dem Stand der Technik vorgeschlagenen Fingerabdrucks- oder Gesichtserkennungseinrichtung) erfolgt.

Der zur Feststellung des Unterschreitens des zweiten endlichen Abstandes verwendete Näherungssensor kann sich unmittelbar in der Nähe des Personensensors oder auch an einem anderen Ort am Fahrzeug befinden. Gemäß einer bevorzugten Ausführungsform sind sowohl der erste als auch der weitere Näherungssensor an dem Türgriff der mittels der Fahrzeugtürverriegelung ver- bzw. entriegelbaren Fahrzeugtür oder in dessen unmittelbarer Nähe angeordnet. Es ist auch möglich, dass lediglich ein einziger Abstandssensor vorgesehen ist, der ein kontinuierliches Ausgangssignal liefert, wobei durch einen Vergleich mit einem ersten und einem zweiten Abstandsschwellwert die entsprechenden Vorgänge ausgelöst werden.

Weitere Ausgestaltungen der Erfindung sind der Beschreibung sowie den Unteransprüchen zu entnehmen.

Die Erfindung wird nachfolgend anhand eines in den beigefügten Abbildungen dargestellten Ausführungsbeispiels näher erläutert. Es zeigen:
- Figur 1: ein Blockdiagramm mit den Komponenten einer erfindungsgemäßen Vorrichtung in einer bevorzugten Ausführungsform;
- Figur 2: ein Flussdiagramm zur Erläuterung der Funktionsweise der erfindungsgemäßen Vorrichtung; und
- Figur 3: ein Zeitablaufschema gemäß einem bevorzugten Ausführungsbeispiel der erfindungsgemäßen Vorrichtung.

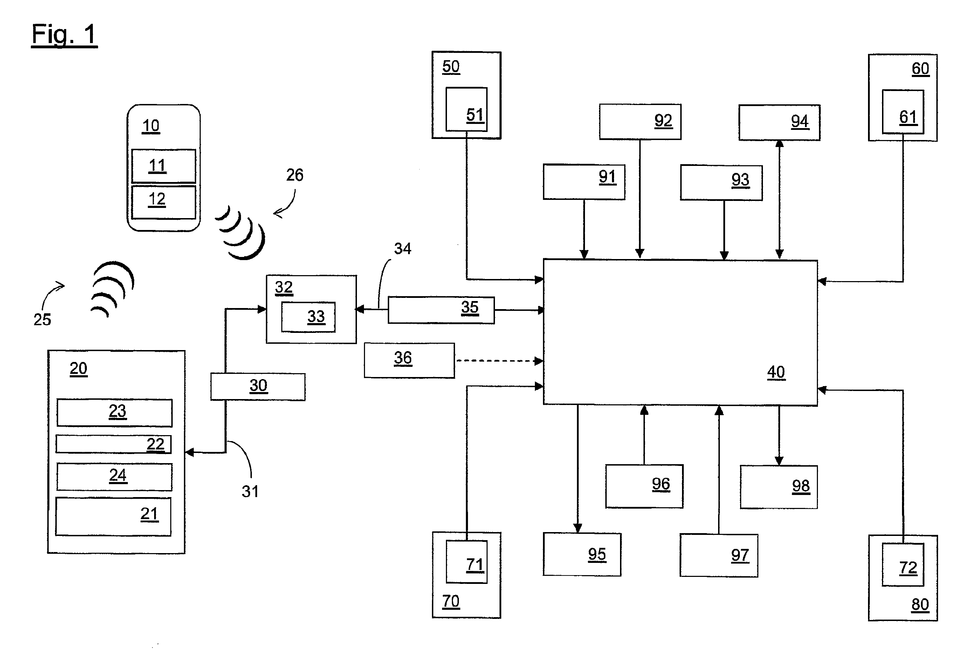

Gemäß Fig. 1 umfasst eine erfindungsgemäße Vorrichtung zur Ansteuerung einer Fahrzeugtürverriegelung eine (z.B. als Schlüsselanhänger ausgestaltete) tragbare Identifikationseinheit 10 mit einer ersten Empfangseinheit 11 und einer ersten Sendeeinheit 12. Die Vorrichtung umfasst ferner eine an jeder anzusteuernden Fahrzeugtür vorgesehene Türgriff-Elektronikeinheit 20, welche eine Stromversorgungseinheit 21 und eine zweite Sendeeinheit 22 aufweist.

Die Türgriff-Elektronikeinheit 20 weist außerdem einen ersten Näherungssensor 23 und einen zweiten Näherungssensor 24 auf. Erfindungsgemäß sind die Nachweiszonen der Näherungssensoren 23 und 24, d.h. diejenigen Zonen, innerhalb derer ein sich näherndes Objekt zu einem Ansprechen des jeweiligen Näherungssensors 23 bzw. 24 führt (z.B. durch Überschreiten eines entlang einer Kennlinie des betreffenden Näherungssensors 23 bzw. 24 definierten Schwellenwertes durch das Sensorsignal), unterschiedlich gewählt. Genauer spricht der erste Näherungssensor 23 bei Eintreten einer Person in eine so genannte Identifikationszone an, was der Fall ist, wenn die Person (typischerweise mit einer Hand) einen ersten Abstand d₁ zu dem ersten Näherungssensor 23 unterschreitet. Dieser erste Abstand d₁ liegt typischerweise im Bereich zwischen 10 bis 150 cm, vorzugsweise im Bereich von etwa 10 bis 20 cm und beträgt besonders bevorzugt ca. 15 cm. Der zweite Näherungssensor 24 spricht bei Eintreten einer Person in eine so genannte Entriegelungszone an, was der Fall ist, wenn die Person (typischerweise ebenfalls mit der Hand) einen zweiten Abstand d₂ zu dem zweiten Näherungssensor 24 unterschreitet, welcher deutlich kleiner als der erste Abstand ist. Dieser zweite Abstand d₂ (< d₁) beträgt typischerweise weniger als 50 cm und bevorzugt weniger als 20 cm. Insbesondere wenn d₁ im Bereich zwischen 10 und 20 cm liegt, beträgt d₂ besonders bevorzugt weniger als 5 cm und ist vorzugsweise insbesondere geringer als die Ausdehnung des zwischen dem Türgriff und der Türoberfläche verbleibenden Zwischenraumes, damit der zweite Näherungssensor 24 beispielsweise dann auslöst, wenn die Hand der Person mit Öffnungsabsicht in diesen Zwischenraum eingreift.

Die Abstandswerte für d₁ und/oder d₂ werden dabei bevorzugt so gewählt, dass diese zum einen groß genug sind, um die erforderlichen Identifikationsvorgänge (bei Unterschreiten von d₁) bzw. den Entriegelungsvorgang (bei Unterschreiten von d₂) mindestens in der Zeit technisch bewältigen zu können, die eine den Türgriff bedienende Person bei normaler Motorik mindestens benötigt, um die entsprechende Entfernungen (d₂-d₁ bzw. d₂) mit der Hand zu durchmessen. Andererseits ist man bestrebt, die Entfernungen (insbesondere hinsichtlich d₂) so klein zu wählen, dass ein versehentliches Entriegeln vermieden wird.

Die Türgriff-Elektronikeinheit 20 steht über einen über eine bidirektionale Schnittstelle 30 verlaufenden Datenbus 31 in Verbindung mit einer zweiten Empfangseinheit 32 mit einer Steuerung 33, und diese zweite Empfangseinheit 32 steht über einen über eine weitere bidirektionale Schnittstelle 35 verlaufenden Datenbus 34 in Verbindung mit der zentralen Fahrzeugelektronikeinheit 40. Die zentrale Fahrzeugelektronikeinheit 40 steht in Verbindung mit den entriegelbaren Fahrzeugtüren (Fahrertür 50 mit Verriegelungseinrichtung 51, Beifahrertür 60 mit Verriegelungseinrichtung 61, linke Hintertür 70 mit Verriegelungseinrichtung 71 und rechte Hintertür 80 mit Verriegelungseinrichtung 81, sowie diversen weiteren Fahrzeugkomponenten (im Beispiel ISS 91, Motorhaube 92, Radio 93, BBS 94, Hupe 95, Heckklappe 96, Heckscheibenheizung 97 und Blinker 98 etc.).

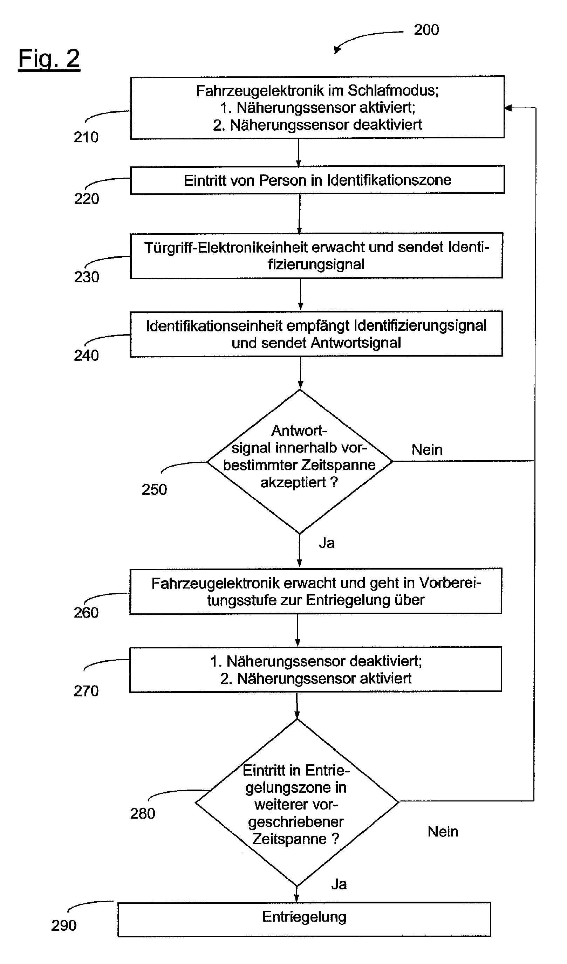

Zur Erläuterung der Funktionsweise der erfindungsgemäßen Vorrichtung wird nachstehend auf das in Fig. 2 gezeigte Flussdiagramm 200 Bezug genommen.

Gemäß Fig. 2 befindet sich zunächst in dem durch den Block 210 dargestellten Zustand bei abgestelltem und verriegeltem Fahrzeug die Fahrzeugelektronik im Schlafmodus. In diesem Zustand ist der erste Näherungssensor 23 aktiviert, wodurch ein Eindringen einer Person in die Identifikationszone überwacht wird, und der zweite Näherungssensor 24 ist deaktiviert.

Dringt gemäß Block 220 eine Person in die Identifikationszone ein, spricht der erste Näherungssensor 23 an, woraufhin gemäß Block 230 die Türgriff-Elektronikeinheit 20 erwacht und die zu der Türgriff-Elektronikeinheit 20 gehörende Sendeeinheit 22 ein Identifizierungssignal 25 (erstes Signal) aussendet. Falls die in die Identifikationszone eingetretene Person eine Identifikationseinheit 10 mit sich führt, wird das Identifizierungssignal 25 von der zu dieser Identifikationseinheit 10 gehörenden Empfangseinrichtung 11 empfangen, wobei das Signal einen ersten kryptographischen Schlüssel enthalten kann. Die zu der Identifikationseinheit 10 gehörende Sendeeinrichtung 12 sendet gemäß Block 240 einen Antwortschlüssel 26 (zweites Signal) aus, welcher von der zweiten Empfangseinheit 32 empfangen und überprüft wird (Block 250). Der Antwortschlüssel wird - wie im Stand der Technik bereits bekannt - in der ID-Einheit anhand eines von außen nicht nachvollziehbaren Algorithmus aus dem ersten kryptographischen Schlüssel berechnet. Im Fahrzeug wird diese Berechnung ebenfalls durchgeführt und überprüft, ob der empfangene Antwortschlüssel dem erwarteten Schlüssel entspricht. Auf diese Weise kann auch ein Abhören der Kommunikation zwischen Fahrzeug und ID-Einheit nicht zur Herstellung eines "Nachschlüssels" genutzt werden. In einer bevorzugten Ausführungsform kann der Signaltransfer zwischen der Türgriff-Elektronikeinheit 20 und der tragbaren Identifikationseinheit 10 auch auf kapazitivem Wege erfolgen, z.B. zwischen der Türgrifffläche und einem an der tragbaren Identifikationseinheit 10 vorgesehenen Einkoppelungsorgan etwa in Form einer sich auf dem Gehäuse der Identifikationseinheit 10 erstreckenden Elektrodenfläche. Ferner kann der erste Näherungssensor 23 zugleich als Antenne zur Übertragung von Signalen während der Datenkommunikation zwischen der Steuerungseinrichtung 20 und der Identifikationseinheit 10 ausgebildet sein.

Wird das Antwortsignal 26 nicht innerhalb einer vorgeschriebenen Zeitspanne akzeptiert, geht die Fahrzeugelektronik unter Rückkehr zu Block 210 wieder in den Schlafmodus über. Wird hingegen das Antwortsignal 26 innerhalb der vorgeschriebenen Zeitspanne akzeptiert, erfolgt eine Aktivierung der Fahrzeugelektronikeinheit 40, welche bereits in eine Vorbereitungsstufe zur Entriegelung der betreffenden Fahrzeugtür 60, 60, 70 oder 80 übergeht (beispielsweise ist eine Bestromung entsprechender Solenoide oder Stellmotoren für die Entriegelung möglich, ohne dass die entsprechende Entriegelung schon ausgelöst wird). Gleichzeitig oder kurz darauf wird gemäß Block 270 der erste Näherungssensor 23 deaktiviert und der zweite Näherungssensor 24 wird aktiviert, wodurch ein Eindringen einer Person in die so genannte Entriegelungszone überwacht wird. Gemäß Block 280 wird überprüft, ob in einer weiteren vorgegebenen Zeitspanne die Person auch in die Entriegelungszone eindringt (bzw. ob die Person zu dem Aktivierungszeitpunkt schon in diesen Bereich eingedrungen war). Dringt innerhalb dieser weiteren vorgegebenen Zeitspanne die Person nicht in die Entriegelungszone ein, geht die Fahrzeugelektronikeinheit 40 unter Rückkehr zu Block 210 wieder in den Schlafmodus über. Dringt hingegen innerhalb der weiteren vorgegebenen Zeitspanne die Person auch in die Entriegelungszone ein, erfolgt eine Entriegelung der betreffenden Fahrzeugtür 50, 60, 70 oder 80 (Block 290).

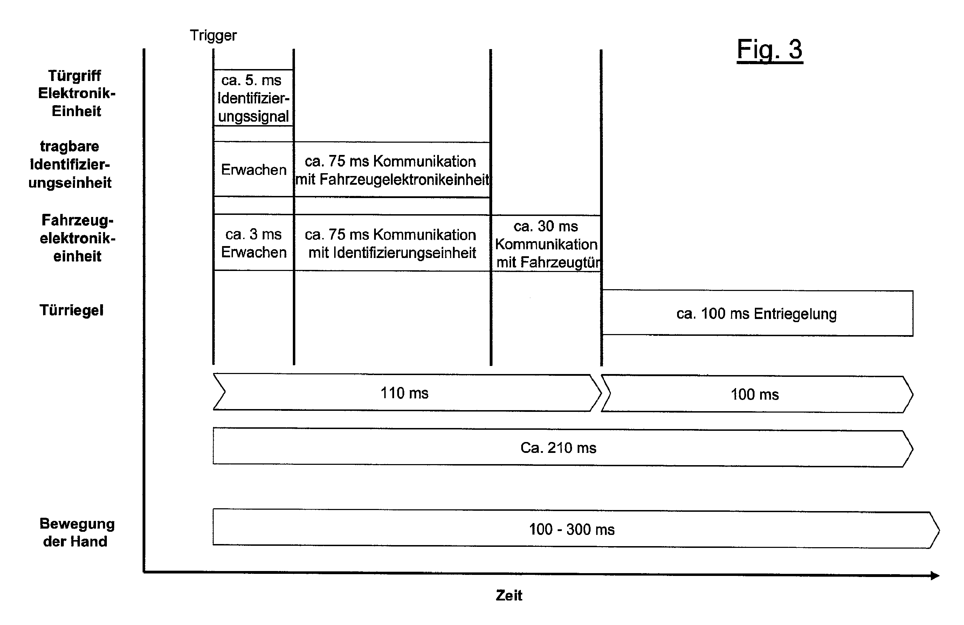

Ein bevorzugtes Zeitablaufschema für die Funktionsweise der erfindungsgemäßen Vorrichtung ist in Fig. 3 dargestellt. Demnach beträgt in diesem Ausführungsbeispiel vom Ansprechen des ersten Näherungssensors 23 an gerechnet, d.h. ab dem Eindringen einer Person in die Identifikationszone, die gesamte Zeitspanne bis zur Entriegelung etwa 210 ms. Von dieser Zeitspanne entfallen die letzten etwa 100 ms auf den eigentlichen mechanischen Entriegelungsvorgang, und die ersten etwa 110 ms entfallen anteilig auf die Aussendung des Identifizierungssignals 25 durch die Türgriff-Elektronikeinheit (ca. 5 ms), den Empfang und die Überprüfung des Antwortsignals 26 (ca. 75 ms) sowie die Kommunikation mit der zentralen Fahrzeugelektronikeinheit 40 und der Fahrzeugtür (30 ms). Anhand von Tests wurde die typische Zeitdauer zwischen dem ersten Eindringen der Person in die Identifikationszone (d.h. dem Unterschreiten des ersten Abstandes d₁) und der Betätigung des Türgriffes zu etwa 100 bis 300 ms bestimmt. Folglich gelingt es mittels der erfindungsgemäßen Vorrichtung, den natürlichen Bewegungsvorgang, d.h. die Annäherung einer Hand des Fahrers an die Fahrzeugtür einschließlich der nachfolgenden Handbewegung bis zur Betätigung des Türgriffes, nahezu optimal für eine Überprüfung der Zugangsberechtigung sowie für den eigentlichen mechanischen Entriegelungsvorgang zu nutzen, so dass im Ergebnis auch bei Verwendung relativ einfacher Verriegelungseinrichtungen eine rasche Entriegelung der Fahrzeugtür ermöglicht wird. Auch können im Rahmen der Erfindung ohne Komforteinbußen tendenziell langsamere und störungsunempfindlichere Übertragungsmodi für die drahtlose Kommunikation zwischen der ID-Einheit und dem Fahrzeug verwendet werden, da der Identifizierungsvorgang quasi vorausschauend durchgeführt wird. Dadurch, dass der eigentliche Entriegelungsvorgang dann vorzugsweise erst bei relativ naher Annäherung ausgelöst wird, wird die Wahrscheinlichkeit unbeabsichtigter Fahrzeugentriegelungen stark reduziert.

## Patentansprüche

1. Vorrichtung zur Ansteuerung der Verriegelung einer Fahrzeugtüreinrichtung, mit:
einer tragbaren Identifikationseinheit (10); und
einer fahrzeugseitigen Steuerungseinrichtung (20), welche bei Annäherung der Identifikationseinheit (10) auf Basis des Resultats einer berührungslosen Datenkommunikation zwischen der Steuerungseinrichtung (20) und der Identifikationseinheit (10) zur Überprüfung der Zugangsberechtigung für die Identifikationseinheit (10) ein Steuersignal zum Entriegeln der Fahrzeugtüreinrichtung erzeugt, wenn ein Vorliegen der Zugangsberechtigung für die Identifikationseinheit (10) festgestellt wurde;
**dadurch gekennzeichnet, dass**
die fahrzeugseitige Steuerungseinrichtung (20) derart ausgelegt ist, dass
bei Annäherung einer Person die berührungslose Datenkommunikation bei Unterschreiten eines ersten endlichen Abstandes (d₁) zwischen der Person und einem als ein erster Näherungssensor ausgelegten Personensensor (23) ausgelöst wird, und
dass nach erfolgreicher Identifikation der Identifikationseinheit (10) das Steuersignal zum Entriegeln der Fahrzeugtüreinrichtung erzeugt wird, wenn die Person einen zweiten endlichen Abstand (d₂) zu einem zweiten Näherungssensor (24), der in einem Griff der zu entriegelnden Fahrzeugtüreinrichtung oder in dessen unmittelbarer Nähe angeordnet ist, erreicht hat, wobei der zweite Abstand (d₂) kleiner als der erste Abstand (d₁) ist.

2. Vorrichtung nach Anspruch 1,
**dadurch gekennzeichnet, dass**
die Fahrzeugtüreinrichtung als Fahrzeugtüre, Heckklappe oder Kofferraumdeckel ausgebildet ist.

3. Vorrichtung nach Anspruch 1 oder 2,
**dadurch gekennzeichnet, dass**
der Personensensor (23) in dem Griff der zu entriegelnden Fahrzeugtüre oder in dessen unmittelbarer Nähe angeordnet ist und mit dem zweiten Näherungssensor identisch ist oder als separater Sensor ausgebildet ist.

4. Vorrichtung nach einem der Ansprüche 1 bis 3,
**dadurch gekennzeichnet, dass**
der Personensensor (23) zugleich als Antenne zur Übertragung von Signalen während der Datenkommunikation zwischen der Steuerungseinrichtung (20) und der Identifikationseinheit (10) ausgebildet ist.

5. Vorrichtung nach einem der Ansprüche 1 bis 4,
**dadurch gekennzeichnet, dass**
ein Signaltransfer zwischen der Identifikationseinheit (10) und der fahrzeugseitigen Steuerungseinrichtung (20) auf kapazitivem Wege erfolgt.

6. Vorrichtung nach einem der vorhergehenden Ansprüche,
**dadurch gekennzeichnet, dass**
das Erzeugen des Steuersignals zum Entriegeln der Fahrzeugtüreinrichtung bei Erreichen des zweiten endlichen Abstandes (d₂) und nach erfolgreicher Identifikation der Identifikationseinheit (10) automatisch ohne eine weitere Handlung der Person erfolgt.

7. Vorrichtung nach einem der vorhergehenden Ansprüche,
**dadurch gekennzeichnet, dass**
der erste Abstand (d₁) im Bereich von 10 bis 150 cm, vorzugsweise im Bereich von 10 bis 20 cm liegt und besonders bevorzugt etwa 15 cm beträgt.

8. Vorrichtung nach einem der vorhergehenden Ansprüche,
**dadurch gekennzeichnet, dass**
der zweite Abstand (d₂) weniger als 50 cm, bevorzugt weniger als 20 cm und besonders bevorzugt weniger als 5 cm beträgt.

9. Vorrichtung nach einem der vorhergehenden Ansprüche,
**dadurch gekennzeichnet, dass**
der zweite Abstand (d₂) geringer als die Ausdehnung des zwischen dem Griff und der Oberfläche der Türeinrichtung verbleibenden Zwischenraumes ist.
